# EUROPEAN PATENT APPLICATION

(11) **EP 4 826 640 A1**
(43) Date of publication of application: **21.10.2026**
(21) Application number: 26172488.4
(22) Date of filing: 15.04.2026
(51) Int. Cl.: G06T 3/4046, G06T 3/4053

(54) **METHOD AND APPARATUS FOR ARTIFICIAL-INTELLIGENCE-BASED UPSCALING OF DIGITAL ELEVATION DATA**

(30) Priority: 15.04.2025 US 202519179708
(71) Applicant: HERE Global B.V., 5611 ZT Eindhoven (NL)
(72) Inventor: PANDEY,, Abhishek, 110075 New Delhi (IN); SAHU,, Karan, 442302 Wardha (IN); SAXENA,, Deekshant, 400708 Navi Mumbai (IN)
(74) Representative: Potter Clarkson

(57) **Abstract**

An approach is provided for artificial-intelligence-based upscaling of digital elevation data. The approach involves, for instance, transforming first low-resolution digital elevation data comprising a single data channel to second low-resolution digital elevation data comprising a plurality of data channels by replicating the single data channel to each data channel of the plurality of data channels. The approach also involves inputting the second low-resolution digital elevation data into a super-resolution deep learning (DL) model to generate first high-resolution digital elevation data comprising the plurality of data channels. The super-resolution DL model is configured to accept input data comprising the plurality of data channels. The approach further involves transforming the first high-resolution digital elevation data comprising the plurality of data channels into second high-resolution digital elevation data comprising the single data channel, and providing the second high-resolution digital elevation data as an output.

## Description

### BACKGROUND

The present invention lies in the technical field of Remote Sensing, Geographic Information Systems (GIS), and Artificial Intelligence (AI). Currently, the acquisition of Digital Elevation Models (DEMs) and Digital Terrain Models (DTMs) relies on satellite imagery, which provides global coverage but is limited by a coarse spatial resolution of approximately 30 meters and a lower accuracy. Conversely, terrestrial methods using vehicles equipped with sensors (e.g., inertial measurement units (IMU), LiDAR, etc.) can capture highly accurate elevation data. However, this high-resolution data is only available for limited geographic regions. Consequently, mapping service providers face significant technical challenges associated with expanding coverage of high-resolution digital elevation data.

### SOME EXAMPLE EMBODIMENTS

Therefore, there is a need for generating high-resolution and accurate digital elevation data for areas where it is currently lacking, as well as to address issues arising from the integration of disparate resolution datasets.

According to one embodiment, a method comprises transforming first low-resolution digital elevation data comprising a single data channel to second low-resolution digital elevation data comprising a plurality of data channels by replicating the single data channel to each data channel of the plurality of data channels. The method also comprises inputting the second low-resolution digital elevation data into a super-resolution deep learning (DL) model to generate first high-resolution digital elevation data comprising the plurality of data channels. The super-resolution DL model is configured to accept input data comprising the plurality of data channels. The method further comprises transforming the first high-resolution digital elevation data comprising the plurality of data channels into second high-resolution digital elevation data comprising the single data channel. The method further comprises providing the second high-resolution digital elevation data as an output. In one embodiment, the super-resolution DL model is a generative adversarial network (GAN) comprising a generator network and a discriminator network, and the generator network comprises one or more convolutional layers (e.g., at least one convolutional two-dimensional (2D) layer and at least one transpose convolutional layer) and one or more batch normalization layers with a parameterized rectified linear unit (PReLU) activation unit.

According to another embodiment, an apparatus comprises at least one processor, and at least one memory including computer program code for one or more computer programs, the at least one memory and the computer program code configured to, with the at least one processor, cause, at least in part, the apparatus to transform first low-resolution digital elevation data comprising a single data channel to second low-resolution digital elevation data comprising a plurality of data channels by replicating the single data channel to each data channel of the plurality of data channels. The apparatus is also cause to input the second low-resolution digital elevation data into a super-resolution deep learning (DL) model to generate first high-resolution digital elevation data comprising the plurality of data channels. The super-resolution DL model is configured to accept input data comprising the plurality of data channels. The apparatus is further caused to transform the first high-resolution digital elevation data comprising the plurality of data channels into second high-resolution digital elevation data comprising the single data channel. The apparatus is further caused to provide the second high-resolution digital elevation data as an output. In one embodiment, the super-resolution DL model is a generative adversarial network (GAN) comprising a generator network and a discriminator network, and the generator network comprises one or more convolutional layers (e.g., at least one convolutional two-dimensional (2D) layer and at least one transpose convolutional layer) and one or more batch normalization layers with a parameterized rectified linear unit (PReLU) activation unit.

According to another embodiment, a computer-readable storage medium carries one or more sequences of one or more instructions which, when executed by one or more processors, cause, at least in part, an apparatus to transform first low-resolution digital elevation data comprising a single data channel to second low-resolution digital elevation data comprising a plurality of data channels by replicating the single data channel to each data channel of the plurality of data channels. The apparatus is also caused to input the second low-resolution digital elevation data into a super-resolution deep learning (DL) model to generate first high-resolution digital elevation data comprising the plurality of data channels. The super-resolution DL model is configured to accept input data comprising the plurality of data channels. The apparatus is further caused to transform the first high-resolution digital elevation data comprising the plurality of data channels into second high-resolution digital elevation data comprising the single data channel. The apparatus is further caused to provide the second high-resolution digital elevation data as an output. In one embodiment, the super-resolution DL model is a generative adversarial network (GAN) comprising a generator network and a discriminator network, and the generator network comprises one or more convolutional layers (e.g., at least one convolutional two-dimensional (2D) layer and at least one transpose convolutional layer) and one or more batch normalization layers with a parameterized rectified linear unit (PReLU) activation unit.

According to another embodiment, an apparatus comprises means for transforming first low-resolution digital elevation data comprising a single data channel to second low-resolution digital elevation data comprising a plurality of data channels by replicating the single data channel to each data channel of the plurality of data channels. The method also comprises inputting the second low-resolution digital elevation data into a super-resolution deep learning (DL) model to generate first high-resolution digital elevation data comprising the plurality of data channels. The super-resolution DL model is configured to accept input data comprising the plurality of data channels. The method further comprises transforming the first high-resolution digital elevation data comprising the plurality of data channels into second high-resolution digital elevation data comprising the single data channel. The method further comprises providing the second high-resolution digital elevation data as an output. In one embodiment, the super-resolution DL model is a generative adversarial network (GAN) comprising a generator network and a discriminator network, and the generator network comprises one or more convolutional layers (e.g., at least one convolutional two-dimensional (2D) layer and at least one transpose convolutional layer) and one or more batch normalization layers with a parameterized rectified linear unit (PReLU) activation unit.
The following numbered paragraphs are disclosed:
1. A computer-implemented method comprising:
   transforming first low-resolution digital elevation data comprising a single data channel to second low-resolution digital elevation data comprising a plurality of data channels by replicating the single data channel to each data channel of the plurality of data channels;
   inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
   transforming the first high-resolution digital elevation data comprising the plurality of data channels into second high-resolution digital elevation data comprising the single data channel; and
   providing the second high-resolution digital elevation data as an output.
2. The computer-implemented method of paragraph 1, wherein the super-resolution DL model is trained using training dataset comprising aerial digital elevation data and corresponding street level digital elevation data depicting a geographic area, and wherein the street level digital elevation data is used as ground truth for the aerial digital elevation data for the training.
3. The computer-implemented method of paragraph 2, wherein the aerial digital elevation data is captured by one or more aerial platforms, and wherein the street level digital elevation data is captured by one or more terrestrial vehicles.
4. The computer-implemented method of paragraph 2, wherein the super-resolution DL model is trained based only on a root mean squared error (RMSE) loss function.
*5.* The computer-implemented method of paragraph 1, wherein the super-resolution DL model is a generative adversarial network (GAN) comprising a generator network and a discriminator network, and wherein the generator network comprises one or more convolutional layers and one or more batch normalization layers with a parameterized rectified linear unit (PReLU) activation unit.
6. The computer-implemented method of paragraph 5, wherein one or more convolutional layers includes at least one convolutional two-dimensional (2D) layer and at least one transpose convolutional layer, and wherein the one or more convolutional layers are learnable layers.
7. The computer-implemented method of paragraph 1, wherein the first high-resolution digital elevation data comprising the plurality of data channels is transformed into the second high-resolution digital elevation data comprising the single data channel by computing a mean of the plurality of data channels.
8. The computer-implemented method of paragraph 1, wherein the single data channel comprises per-pixel elevation values.
9. The computer-implemented method of paragraph 1, wherein the plurality of data channels corresponded to a red color data channel, a green color data channel, and a blue color data channel of an RGB image.
10. The computer-implemented method of paragraph 1, further comprising:
   mapping one or more roads of a road network based on the output; and
   storing the one or more mapped roads in digital map data of a geographic database.
11. An apparatus comprising:
   at least one processor; and
   at least one memory including computer program code for one or more programs,
   the at least one memory and the computer program code configured to, with the at least one processor, cause the apparatus to perform at least the following,
      transforming first low-resolution digital elevation data comprising a single data channel to second low-resolution digital elevation data comprising a plurality of data channels by replicating the single data channel to each data channel of the plurality of data channels;
      inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
      transforming the first high-resolution digital elevation data comprising the plurality of data channels into second high-resolution digital elevation data comprising the single data channel; and
      providing the second high-resolution digital elevation data as an output.
12. The apparatus of paragraph 11, wherein the super-resolution DL model is trained using training dataset comprising aerial digital elevation data and corresponding street level digital elevation data depicting a geographic area, and wherein the street level digital elevation data is used as ground truth for the aerial digital elevation data for the training.
13. The apparatus of paragraph 12, wherein the aerial digital elevation data is captured by one or more aerial platforms, and wherein the street level digital elevation data is captured by one or more terrestrial vehicles.
14. The apparatus of paragraph 12, wherein the super-resolution DL model is trained based only on a root mean squared error (RMSE) loss function.
15. The apparatus of paragraph 11, wherein the super-resolution DL model is a generative adversarial network (GAN) comprising a generator network and a discriminator network, and wherein the generator network comprises one or more convolutional layers and one or more batch normalization layers with a parameterized rectified linear unit (PReLU) activation unit.
16. A non-transitory computer-readable storage medium, carrying one or more sequences of one or more instructions which, when executed by one or more processors, cause an apparatus to at least perform the following steps:
   transforming first low-resolution digital elevation data comprising a single data channel to second low-resolution digital elevation data comprising a plurality of data channels by replicating the single data channel to each data channel of the plurality of data channels;
   inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
   transforming the first high-resolution digital elevation data comprising the plurality of data channels into second high-resolution digital elevation data comprising the single data channel; and
   providing the second high-resolution digital elevation data as an output.
17. The non-transitory computer-readable storage medium of paragraph 16, wherein the super-resolution DL model is trained using training dataset comprising aerial digital elevation data and corresponding street level digital elevation data depicting a geographic area, and wherein the street level digital elevation data is used as ground truth for the aerial digital elevation data for the training.
18. The non-transitory computer-readable storage medium of paragraph 17, wherein the aerial digital elevation data is captured by one or more aerial platforms, and wherein the street level digital elevation data is captured by one or more terrestrial vehicles.
19. The non-transitory computer-readable storage medium of paragraph 17, wherein the super-resolution DL model is trained based only on a root mean squared error (RMSE) loss function.
20. The non-transitory computer-readable storage medium of paragraph 16, wherein the super-resolution DL model is a generative adversarial network (GAN) comprising a generator network and a discriminator network, and wherein the generator network comprises one or more convolutional layers and one or more batch normalization layers with a parameterized rectified linear unit (PReLU) activation unit.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing artificial-intelligence (AI) -based upscaling of digital elevation data, according to one example embodiment;
FIG. 2 is a diagram of components of a mapping platform capable of providing AI-based upscaling of digital elevation data, according to one example embodiment;
FIG. 3 is a flowchart of a process for providing artificial-intelligence (AI) -based upscaling of digital elevation data, according to one example embodiment;
FIG. 4 is a diagram of example low-resolution and high-resolution digital elevation data, according to one example embodiment;
FIG. 5 is a diagram of ground truth, input, and output digital elevation data, according to one example embodiment;
FIG. 6 is a diagram of an AI model workflow for providing artificial-intelligence (AI) -based upscaling of digital elevation data, according to one example embodiment;
FIG. 7 is a diagram of an architecture for a super-resolution deep learning (DL) model, according to one example embodiment;
FIG. 8 is a diagram of a geographic database, according to one embodiment;
FIG. 9 is a diagram of hardware that can be used to implement an embodiment;
FIG. 10 is a diagram of a chip set that can be used to implement an embodiment; and
FIG. 11 is a diagram of a mobile terminal that can be used to implement an embodiment.

### DESCRIPTION OF SOME EMBODIMENTS

Examples of a method, apparatus, and computer program for artificial-intelligence (AI) -based upscaling of digital elevation data are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such can also "one embodiment" is used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

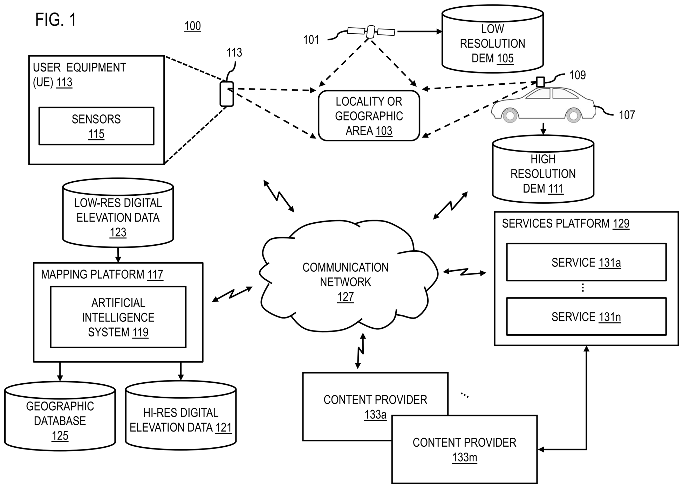

FIG. 1 is a diagram of a system 100 capable of providing artificial-intelligence (AI) - based upscaling of digital elevation data, according to one example embodiment. Super-resolution (SR) (also referred to herein as upscaling) is a class of techniques aimed at enhancing the spatial resolution of low-resolution data to produce corresponding high-resolution versions. This field has witnessed rapid advancements and finds increasing utility across a multitude of applications such as remote sensing and spatial data analysis. Within the domain of remote sensing and spatial data analysis, Digital Elevation Models (DEMs) play a pivotal role in various geospatial analyses such as for mapping, navigation, and other location-based services particularly with respect to autonomous. In one embodiment, these models (also referred to generally as digital elevation data) are typically represented as single-channel two-dimensional matrices, where each value in the single data channel corresponds to an elevation value. Obtaining high-resolution DEM data (e.g., with spatial resolution of 50 cm or greater) directly can be challenging due to limitations associated with sensor technology, environmental conditions during data acquisition, and the considerable costs involved in high-resolution surveys. Consequently, the ability to generate high-resolution DEMs from more readily available low-resolution DEM data through super-resolution techniques offers a compelling and efficient alternative.

For example, aerial platforms/vehicles such as satellites 101 capture DEM/Digital Terrain Model (DTM) layer representing a locality or geographic area 103 from space (or any other overhead perspective) at typical spatial resolutions of approximately 30 meters and have a vertical and horizontal accuracy of approximately 5 meters. In one embodiment, spatial resolutions above a threshold values (e.g., 50 cm or any other specified threshold) can be classified as low-resolution DEM data 105. Another source of DEM data are fleets of specialized mapping vehicles 107 that can capture elevation details of a geographic area 103 through terrestrial means using sensors 109 such as but not limited to inertial measurement units (IMU) and LiDAR which have spatial resolutions of approximately 10-50 cm and have accuracy in the centimeter scale. In one embodiment, DEM data at these resolutions and accuracy are classified as high-resolution DEM data 111. In some scenarios, mobile devices (e.g.., user equipment devices 113 such mobile phones equipped with similar sensors 115 - e.g., IMUs and LiDAR) can also sources of high-resolution DEM data 111 for a given geographic area 103. However, because of the limited number specialized mapping vehicles, this high-resolution DEM data 111 historically has very limited geographic coverage and available only for major roads (e.g., Function Class (FC) 1 and 2) but has been lacking in other geographic areas and in minor roads such as FC 3-5. Thus, mapping service providers (e.g., operators of the mapping platform 117) do not have a high resolution and high accuracy DEM data for these missing areas and/or roads.

To address these technical challenges, the system 100 introduces a capability to use an AI system 119 (e.g., employing a generative AI/deep learning (DL) model) to generate high resolution and accurate (e.g., using best fit method) digital elevation data (e.g., high-resolution digital elevation data 121) for roads and/or other geographic areas 103 missing such information by upscaling more readily available low-resolution digital elevation data 123. The term "deep learning (DL)" refers, for instance, to a neural network with more than one hidden layer. This generated high-resolution digital elevation data 121 can then be stored in or otherwise processed (e.g., via a mapmaking pipeline) to generate digital map data of a geographic database 125. By way of example, the high-resolution digital elevation data 121 and/or corresponding digital map data of the geographic database 125 can be accessed over a communication network 127 by end users such as but not limited to vehicles 107, UEs 113, a services platform 129, one or more services 131a-131n (also collectively referred to as services 131) of the services platform 129, one or more content providers 133a-133m (also collectively referred to as content providers 133), and/or any other component with access to the system 100.

Historically, techniques such as but not limited to nearest neighbor and/or cubic convolution is used to increase the resolution of Satellite images. However, this conventional method may increase the resolution, but it does not account for errors in accuracy. These conventional approaches are also limited in their ability to generate new content or create variations beyond interpolation, i.e., they cannot create/generate for areas outside of the existing pixel and require interpolation to achieve the same.

Furthermore, the conflation of satellite-based DEM and terrestrial DEM creates issues such as waterfall error wherein there is a sudden dip in elevation in lane/road joins due to differences in the respective resolutions and accuracies of each DEM source. Such errors or anomalies can create a grave problem for Advanced Driver Assistance System (ADAS) and autonomous vehicle (AV) mapping and navigation solutions.

In one embodiment, the mapping platform 117 has access to low-resolution DEM data 105 (e.g., satellite DEM which is in approximately 30 meter classified as low-resolution). In parallel, the mapping platform 117 also has access to High Quality/High definition (HQ/HD) DEM data 111 from the LiDAR of specialized mapping vehicles 107, and other sources such as IMU. However, this high-resolution DEM data 111 is generally not is not mapped/modeled (e.g., correlated to specific locations of on the three-dimension (3D) Earth frame of reference) and is stored in databases only. In addition, it is available for only a fractional portion of Earth (e.g., because of limited coverage by specialized mapping vehicles 107). Thus, in one embodiment, the system 100 can use the AI system 119 (e.g., a generative AI super resolution DL model) to upscale the existing low-resolution DEM data 105 from aerial platforms (e.g., satellites which have more global coverage) to a higher resolution by using the existing limited availability high-resolution DEM data 111 as training data for the AI system 119 to improve its upscaling performance specifically for DEM data.

In addition, the resulting upscaled high-resolution digital elevation data 121 will be more accurate than the satellite-based low-resolution DEM data 105 and 123 which have low spatial accuracy when compared with the LiDAR/IMU data collected from terrestrial vehicles 107 and/or UEs 1134. In one embodiment, the super-resolution DL model of the AI system 119 creates a best fit function to reduce the inflation/exaggeration of elevation value due to conventional upscaling. This is because the model architecture is designed in such a way that the convolution filters are learnable, which updates with each epoch to generate best quality and accurate image, i.e., best fit. Additionally, super resolution models generally require RGB (3 channel) image as input, whereas DEM images are a single channel image with each pixel (grayscale value) representing elevation value; thus handling and processing these values become crucial. In one embodiment of the AI system 119, this is handled in a single go through use of multiple loss functions, i.e., SSIM, PSNR, and/or gen_loss resulting in high perceptual quality and high accuracy or lower root mean squared error (RMSE).

In other words, conventional super-resolution algorithms generally fall into two primary categories: those that prioritize high perceptual quality (HPQ), focusing on generating visually appealing results that often exhibit realistic textures and fine details, and those that emphasize high accuracy (HA), concentrating on minimizing the deviation between the super-resolved output and the actual high-resolution ground truth data. Traditional super-resolution methods often excel in one of these aspects but tend to compromise on the other, leading to an inherent trade-off between visual fidelity and data accuracy. For instance, methods geared towards high perceptual quality might introduce visually plausible details that are not entirely consistent with the true elevation values, while techniques focusing on high accuracy might produce overly smooth or blurry results that lack the visual richness desired for certain applications. This fundamental conflict between perceptual quality and accuracy presents a significant hurdle in the field of super-resolution, particularly in the context of specialized data like DEMs where both visually informative and quantitatively accurate representations are often required. This necessitates the development of novel approaches capable of achieving a desirable equilibrium between these two critical factors.

Super-resolution techniques aimed at achieving high perceptual quality (HPQ) prioritize the generation of visually pleasing and realistic results. These methods often leverage the power of Generative Adversarial Networks (GANs) and employ perceptual loss functions, such as the VGG loss commonly used for natural images. The VGG loss, for example, compares high-level features extracted from a pre-trained deep network, encouraging the super-resolved image to have similar semantic content and style to the high-resolution ground truth. Examples of HPQ algorithms include SRGAN, ESRGAN, and more recently, diffusion-based models. While these HPQ methods can be effective in creating visually compelling images with intricate details, their primary focus on generating plausible textures can sometimes lead to inaccuracies in the underlying data values, particularly in applications like DEM processing where the precise elevation values are critical for downstream analyses. The generated details might look realistic to a human observer but may not accurately represent the true topographic features.

Conversely, high accuracy (HA) super-resolution methods prioritize minimizing the distortion between the generated super-resolution data and the high-resolution ground truth. These techniques often rely on traditional interpolation methods, such as Bicubic interpolation, or early deep learning approaches that utilize pixel-wise loss functions like Mean Squared Error (MSE). Examples of HA-focused algorithms include Bicubic interpolation, SRCNN, FSRCNN, and VDSR. While these methods excel at ensuring fidelity to the original data and minimizing statistical errors, they often fall short in producing visually enhanced results, typically yielding overly smooth or blurry outputs that lack fine details and perceptual richness.

Thus, there exists a trade-off between perceptual quality and accuracy (often referred to as distortion) in super-resolution methods. Improving one aspect frequently necessitates a compromise in the other due to inherent limitations in model capacity and the nature of the optimization objectives. This established perception-distortion trade-off underscores the innovative aspects of the AI system 119 of the various embodiments described herein, which aims to overcome this inherent limitation within the field of super-resolution by striving for a balance between these two seemingly opposing goals.

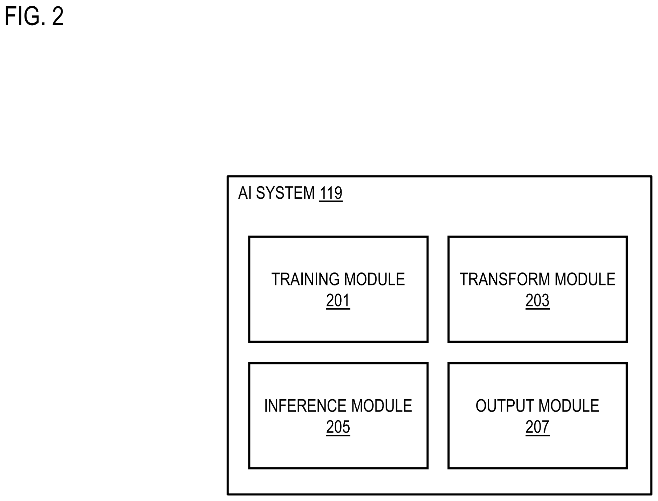

FIG. 2 is a diagram of components of an AI system 119 of a mapping platform 117 capable of providing AI-based upscaling of digital elevation data, according to one example embodiment. In one embodiment, as shown in FIG. 2, the AI system 119 includes one or more components for providing machine learning-based upscaling of digital elevation data, according to the various embodiments described herein. It is contemplated that the functions of these components may be combined or performed by other components of equivalent functionality. In this embodiment, the AI system 119 includes a training module 201, a transform module 203, an inference module 205, and an output module 207. The above presented modules and components of the AI system 119 can be implemented in hardware, firmware, software, or a combination thereof. Though shown as an entity of the mapping platform 117 in FIG. 1, it is contemplated that the AI system 119 can be implemented as a separate entity or may be implemented as a module of any other component of the system 100 (e.g., a component of the services platform 129, services 131, vehicle 107, UE 113, etc.). In another embodiment, one or more of the modules 201-207 may be implemented as a cloud based service, local service, native application, or combination thereof. In yet another embodiment, the functions of the AI system 119 described herein may be performed alone or in combination with the mapping platform 117. The functions of the AI system 119 and the modules 201-207 are discussed in more detail below.

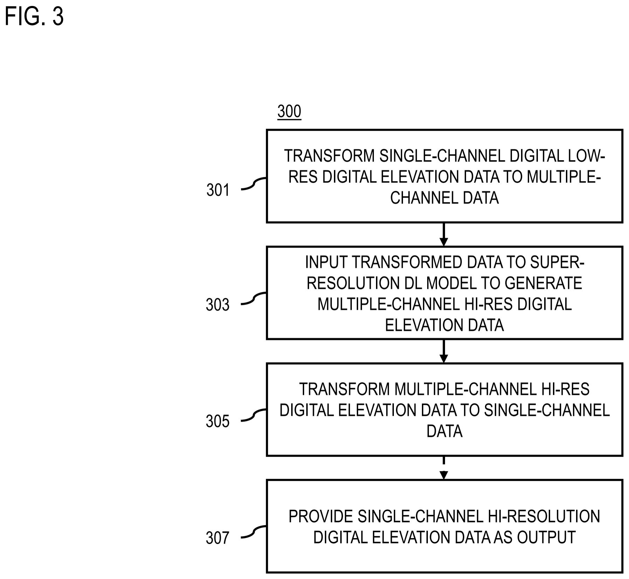

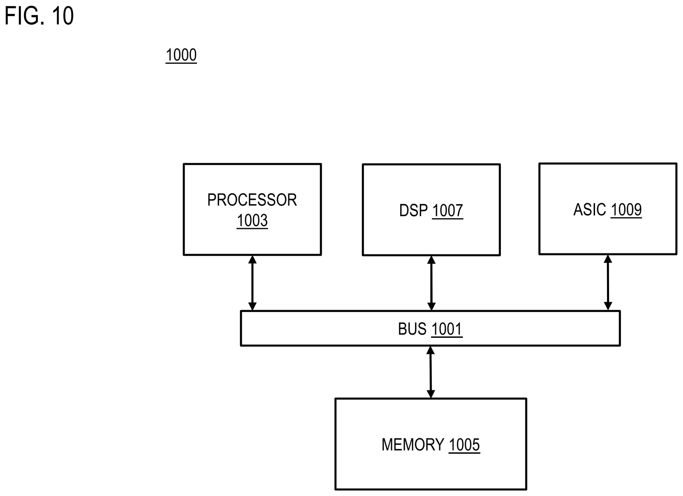

FIG. 3 is a flowchart of a process for providing artificial-intelligence (AI) -based upscaling of digital elevation data, according to one example embodiment. In various embodiments, the AI system 119 and/or one or more of its modules 201-207 as shown in FIG. 2 may perform one or more portions of the process 300 and may be implemented in, for instance, a chip set including a processor and a memory as shown in FIG. 10. As such, the AI system 119 and/or one or more of its modules 201-207 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

At step 301, the transform module 203 transforms first low-resolution digital elevation data (e.g., low-resolution DEM data 105 and/or low-resolution digital elevation data 123) comprising a single data channel to second low-resolution digital elevation data comprising a plurality of data channels by replicating the single data channel to each data channel of the plurality of data channels. More specifically, DEM data are a single channel 2-D matrix, but GAN-based super-resolution DL models generally requires multiple channel data (e.g., three-channel data). In one embodiment, this single-channel DEM data is transformed to three channel DEM data by copying a single data channel/layer of DEM among all the multiple data channels (e.g., three channels) for input to a super-resolution DL model. In other words, the collected DEM data (e.g., sourced from satellites 101) utilized by the super-resolution DL model is single-channel, with each pixel value in the single data channel representing the elevation at a specific location corresponding to a pixel of the DEM image. However, many GAN-based super-resolution models are designed to process three-channel input data, typically in the Red, Green, and Blue (RGB) color space with each data channel representing each color value in a respective color space for each pixel. To accommodate this multiple-channel input, the single-channel DEM data is transformed into a three-channel format, for instance, by replicating the single elevation layer across all three channels. This approach advantageously allows the model to leverage the existing architectural designs of super-resolution GANs and learned feature representations from models trained on three-channel data for single-channel use on DEMs. This adaptation enables the utilization of GAN-based architectures for the task of single-channel DEM super-resolution.

In one embodiment, the training module 201 performs functions related to training the super-resolution DL model of the AI system 119. Training a GAN based super-resolution model uses Low Quality/Low Resolution (LQ/LR) DEM data as input and generates super-resolution data (e.g., upscaled higher resolution versions of the low-resolution DEM input data) as output. During training, this super-resolution output is compared against the HQ/HR paired ground truth to calculate loss which will help to improve the model in sub-sequent steps (e.g., based on learning through backpropagation). As previously discussed, in one embodiment, the HQ/HR DEM data is generated from the mapping platform 117's database of high-resolution DEM data 111 (or equivalent) and the LQ/LR DEM data 105 is generated from satellite data. The training of the super-resolution DL model is based a dataset comprising pairs of LQ/LR input data and corresponding HQ/HR ground truth data. These pairs, for instance, comprise the low-resolution DEM data 105 for a locality/geographic area 103 and the high-resolution DEM data 111 for the same locality/geographic area 103 (e.g., the high-resolution DEM data 111 is used as the ground truth for the corresponding low-resolution DEM data 105). By way of example, the low-resolution DEM data 105 typically has a spatial resolution of approximately 30x30 meters per pixel. This relatively coarse resolution implies a level of generalization where fine-scale topographic variations might be averaged out within each pixel, resulting in a less detailed representation of the terrain. Consequently, this LQ data serves as an appropriate input to demonstrate the model's ability to enhance resolution and recover finer details that would be evident in the high-resolution DEM data 111 with its spatial resolution of approximately 10-50 cm.

As noted, in one embodiment, the HQ/HR ground truth DEM data is obtained from the mapping platform 117's database of high-resolution DEM data 111. This dataset has a significantly higher spatial resolution, on the order of centimeters per pixel. This level of detail allows for a very accurate representation of the Earth's surface, capturing even subtle topographic features. During the training process, the LQ/LR DEM data is fed into the super-resolution DL model (e.g., a GAN AI model), which generates a super-resolution output. This output is then compared against the corresponding HQ/HR ground truth data to calculate the loss, which guides the model's learning process. The substantial difference in resolution between the LQ and HQ data provides a clear target for the super-resolution model to learn from, enabling it to generate high-resolution DEMs with enhanced detail.

Accordingly, in step 303, the training module 201 input the second low-resolution digital elevation data (e.g., the transformed low-resolution DEM data 105 and/or 123) into a super-resolution deep learning (DL) model to generate first high-resolution digital elevation data (e.g., high-resolution DEM data 121) comprising the plurality of data channels. In this embodiment, the super-resolution DL model is configured to accept input data comprising the plurality of data channels. In other embodiments, the super-resolution DL can be configured to accept input data with a single data channel (e.g., the elevation value layer) and a transformation as described in step 301 would not be needed.

There is a loss of data in LQ/LR DEM as the LQ/LR DEM data represents an area of approximately 30x30 meters. Hence, the system 100 may observe some pixels are missing while clipping due to the fact that the overlaying layer covers only a fractional (minority) area of the pixel hence producing a staircase kind of pixels (e.g., akin to an anti-aliasing effect). While HQ covers only a few centimeters area, and since it has a very small pixel size there is no loss or very fractional loss with respect to overlaying layer.

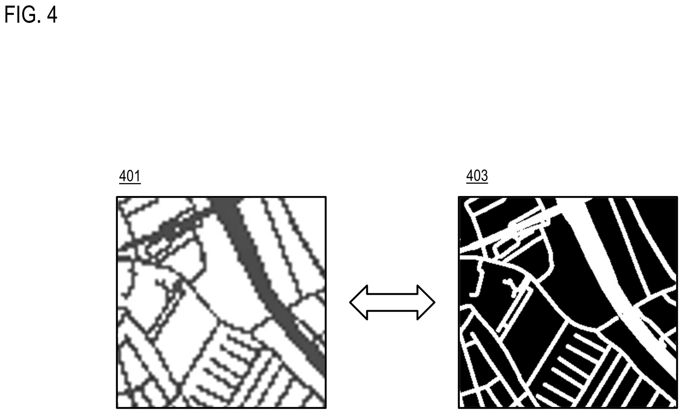

FIG. 4 is a diagram of example low-resolution digital elevation data 401 and high-resolution digital elevation data 403, according to one example embodiment. As shown in FIG. 4, the phenomenon can manifest as "jagged edges" or a "staircase kind of pixels" in the LQ/LR DEM data 401. In contrast, the HQ/HR DEM data 401, with its centimeter-level resolution, has a very small pixel size, minimizing the occurrence of such fractional loss and "jagged edges" with respect to any overlaying layer.

In one embodiment, the super-resolution DL model is a generative adversarial network (GAN) comprising a generator network and a discriminator network. In one embodiment, the generator architecture of super-resolution GAN consists of a convolution layer, batch normalization layer with a Parametrized ReLU (PReLU) activation unit and follows a residual structure.

More specifically, the super-resolution GAN employed in the various embodiments described herein comprises two main components: a generator and a discriminator. The generator network is responsible for taking the LQ/LR DEM data as input and producing high-resolution super-resolved DEM data. The architecture of this generator network can achieve a balance between perceptual quality and accuracy. As noted, it consists of a Convolutional layer, followed by a Batch Normalization layer with a Parametrized ReLU (PReLU) activation unit, and incorporates a residual structure.

The initial Convolutional layer serves the purpose of extracting relevant features from the input three-channel DEM data. This layer applies a set of learnable filters to the input, generating feature maps that represent different characteristics and patterns present in the data. The subsequent Batch Normalization (BatchNorm) layer plays a role in stabilizing the training process of the deep generator network and improving its generalization ability. By normalizing the activations of the preceding convolutional layer, BatchNorm helps to mitigate issues such as vanishing or exploding gradients, which can hinder the training of deep neural networks. Following Batch Normalization, a Parametrized ReLU (PReLU) activation unit introduces non-linearity into the network. Unlike the standard ReLU activation function, which sets all negative inputs to zero, PReLU allows for a small, non-zero slope for negative inputs, and this slope is a learnable parameter. This added flexibility enables the network to adapt the activation function during training, leading to improved performance in learning complex mappings.

The generator architecture also incorporates a residual structure. Residual connections involve adding the input of a block of layers to the output of that block. This technique is particularly beneficial for training very deep networks as it helps to alleviate the vanishing gradient problem, allowing gradients to flow more easily through the network. Furthermore, residual structures enable the network to learn residual mappings, focusing on learning the difference between the low-resolution input and the desired high-resolution output, rather than learning the entire mapping from scratch. By way of example, using PReLU instead of standard ReLU provides the network with more flexibility in learning complex mappings by allowing the slope of the negative part of the activation function to be learned. The use of a residual structure enables the generator network have more layers (i.e., be deeper), leveraging the benefits of residual connections for learning complex super-resolution mappings.

In one embodiment, the generator network consists of two types of convolutional layers e.g., a convolutional 2D layer and a transpose convolutional layer. Convolutional 2D layers are used to extract features, hence after each convolutional feature map has been generated, the transpose convolution uses these extracted features to up-sample the image using its learnable parameters which will update at each step to generate better quality up-scaled data.

In other words, within the generator, two primary types of convolutional layers are utilized: Convolution 2D layers and Transpose Convolution layers. The Convolution 2D layers are primarily responsible for extracting features from the three-channel input DEM data. At each Convolution 2D layer, a feature map is generated, capturing different aspects and patterns present in the input data. These feature maps serve as intermediate representations that the network uses to learn the mapping from low to high resolution. The Transpose Convolution layers, also known as deconvolution layers, are employed for up-sampling the feature maps to generate the higher-resolution DEM data. Unlike standard convolution, which typically reduces the spatial dimensions of the input, transpose convolution increases them. This up-sampling is achieved using learnable parameters within the transpose convolution layers. The combination of Convolution 2D for feature extraction and Transpose Convolution for up-sampling provides for deep learning-based super-resolution models.

In one embodiment, with each step, both convolutions will update their learnable parameters to extract rich sets of features and improve the up-sampling quality so that this layer are learnable layer. This helps the super-resolution DL model to create a best fit for the DEM generation, essentially reducing the overall RMSE error that is observed in HQ/HR and LQ/LR by producing the super-resolution DEM data.

More specifically, both the Convolution 2D and the Transpose Convolution layers possess learnable parameters in the form of weights and biases. During the training process, these parameters are iteratively updated at each step based on the calculated loss, which represents the difference between the generated super-resolution output and the high-quality ground truth data. An objective of this parameter updating is to enable the network to extract an increasingly richer set of features from the input data and to progressively improve the quality of the up-sampling performed by the transpose convolution layers. This learning process allows the model to create a best fit for the DEM generation, effectively reducing the overall loss Root Mean Squared Error (RMSE) observed between the generated super-resolution DEM and the high-quality ground truth DEM. The iterative updating of learnable parameters through backpropagation and optimization is the mechanism by which the super-resolution DL model (e.g., GAN) learns the mapping from LQ/LR to HQ/HR DEM data.

Using Conv2D in combination with the Transpose layer for up-sampling will help to generate super-resolution DEM data which persist with high perceptual quality and high Structural Similarity Index Measure/ Peak Signal-to-Noise Ratio (SSIM/PSNR).

Unlike image data whose pixel value is between 0-255 depicts brightness, contrast, etc. for each RGB channel, DEM/DTM's pixel value (DN value) is purely elevation (e.g., single channel elevation). Therefore, VGG loss is no longer useful, because VGG loss is based on perceptual loss which is not relevant to elevation data use case of the various embodiments described herein. Accordingly, in one embodiment, only root mean squared error (RMSE) is used to calculate loss.

In other words, the loss function employed for training the super-resolution DL model is the Root Mean Squared Error (RMSE). RMSE is a statistical metric that measures the average magnitude of the errors between the predicted values (e.g., the generated super-resolution DEM) and the actual values (e.g., the HQ ground truth DEM). It is calculated by taking the square root of the average of the squared differences between the predicted and actual values. The choice of RMSE as the loss function is particularly relevant for DEM data due to the nature of its pixel values. Unlike natural images, the primary goal in DEM super-resolution for many applications is to accurately reconstruct the elevation values and not RGB values. RMSE directly penalizes deviations in these elevation values, making it a suitable loss function for ensuring high accuracy in the generated DEMs.

This contrasts with the VGG loss, which is commonly used in natural image super-resolution tasks. VGG loss relies on features extracted from a pre-trained VGG network (a deep convolutional neural network typically trained on a large dataset of natural images) to compare the perceptual similarity between the generated and ground truth images. While effective for enhancing the visual quality of natural images, VGG is not appropriate for DEM data because the features learned by the VGG network are geared towards recognizing objects and textures in natural scenes, which are fundamentally different from the representation of elevation in a DEM. The priority for DEM data lies in preserving the accuracy of the elevation values, and RMSE directly addresses this by measuring the pixel-wise difference in elevation. The choice of RMSE as the loss function underscores the priority of data accuracy in this DEM super-resolution task, aligning with the goal of achieving high accuracy.

In one embodiment, accuracy calculation is based on Structural Similarity Index Measure (SSIM) and Peak signal-to-noise ratio (PSNR). The Structural Similarity Index Measure (SSIM) is a perceptual metric that evaluates the quality of images by considering structural information, luminance, and contrast. It aims to quantify the structural similarity between the generated super-resolution DEM and the high-quality ground truth DEM, providing an indication of the quality of the results. SSIM works by comparing local patterns of pixel intensities between the two images. Generally, the SSIM value ranges from -1 to 1, with a higher value indicating greater similarity and better perceptual quality. The use of SSIM as an evaluation metric indicates that while data accuracy (emphasized by RMSE) is one factor, the perceptual quality of the generated DEMs is also considered in the analysis.

Peak Signal-to-Noise Ratio (PSNR) is a metric for evaluating the reconstruction quality of image and video compression or restoration algorithms. It measures the ratio between the maximum possible power of a signal and the power of corrupting noise that affects the fidelity of its representation. In the context of DEM quality assessment, PSNR can be used to quantify the reconstruction accuracy by comparing the generated super-resolution DEM with the high-quality ground truth. PSNR is typically expressed in decibels (dB), and a higher PSNR value generally indicates better reconstruction accuracy, meaning lower distortion between the generated and the ground truth data. The inclusion of PSNR as an evaluation metric further reinforces the emphasis on high accuracy in the super-resolution DL model, as it directly measures the pixel-level similarity between the generated and ground truth DEMs.

Employing both SSIM and PSNR provides a more balanced and comprehensive evaluation of the super-resolution model. SSIM assesses the perceptual similarity, reflecting how visually pleasing and structurally consistent the generated DEM is with the ground truth, while PSNR quantifies the pixel-level reconstruction accuracy, indicating the fidelity of the elevation values. By considering both metrics, the performance of the model can be evaluated in terms of both its visual quality and its accuracy in representing the underlying elevation data. This dual evaluation approach aligns with the goal of bridging the gap between high perceptual quality and high accuracy in DEM super-resolution.

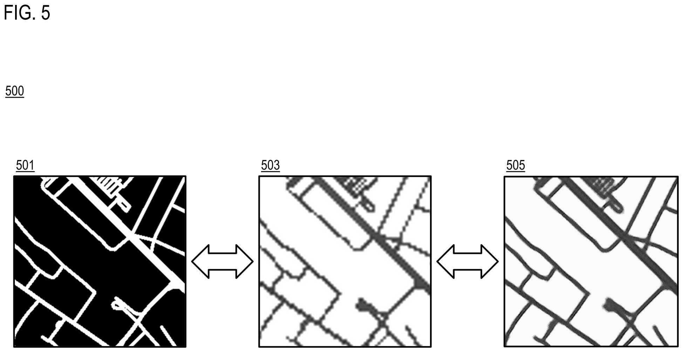

FIG. 5 is a diagram 500 of ground truth elevation data 501, input elevation data 503, and output digital elevation data 505, according to one example embodiment. In the example of FIG. 5, a comparison is provided to demonstrate the application of the super-resolution DL model in enhancing the resolution and accuracy of DEM/DTM data. The leftmost panel depicts an example of ground truth elevation data 501. This High Resolution (HR) DTM is derived from high-fidelity sources, such as Light Detection and Ranging (Lidar) and Inertial Measurement Unit (IMU) data, which may be further processed via interpolation. In this illustrative example, the ground truth elevation data 121 possesses a resolution of 2.5 meters, representing the desired target state of high spatial detail and accuracy.

The central panel illustrates an example of the input low resolution DEM/DTM (LR DTM data provided to the generative super-resolution DL model. This input data originates from sources with inherently lower resolution, such as the satellite 111, which typically provides data at an approximately 30-meter resolution. The specific data shown in the central panel has been up-sampled from the original 30-meter resolution to 10 meters using an interpolation technique (e.g., natural neighbors). This LR DTM 503 exhibits characteristic limitations of lower-resolution data, including less defined edges (e.g., jagged or "staircase" appearance) and lower spatial accuracy compared to the ground truth elevation data 501. This corresponds to the LQ/LR data described previously.

The rightmost panel displays the model output elevation data 505, which is a High Quality (HQ) DEM/DTM generated by an embodiment of the disclosed super-resolution generative model when processing the LR DTM input 503 shown in the central panel. The resulting output DEM 505 achieves a resolution of 2.5 meters, substantially enhancing the resolution of the input LR DTM and matching the resolution of the ground truth data 501. Performance metrics associated with this specific output example include a Generator Loss (Gen_loss) of 0.03, a Structural Similarity Index Measure (SSIM) of 0.91, a Discriminator Loss (disc_loss) of 0.14, and a Peak Signal-to-Noise Ratio (PSNR) of 21.03. These metrics serve to quantify the performance of the generative model, indicating a high degree of structural similarity (SSIM) and signal fidelity (PSNR) relative to the ground truth data 501, thereby demonstrating the model's ability to produce results with both high perceptual quality (HPQ) and high accuracy (HA), effectively reducing errors (e.g., RMSE, implied by high SSIM/PSNR) compared to the original LQ input.

At step 305, once model is trained, the inference module can perform the following: single channel DEM data will be transformed to three channel and passed through model, the model will return three channel super-resolution DEM data which will re-transform to single channel by taking mean along each pixel channel. In other words, the transform module 203 transforms the first high-resolution digital elevation data (e.g., the high-resolution digital elevation data 121) comprising the plurality of data channels into second high-resolution digital elevation data comprising the single data channel (e.g., the high-resolution digital elevation data 121 transformed from multiple channels to a single channel).

In one embodiment, following the training and application of the super-resolution DL model, the immediate output is a three-channel super-resolution DEM. To align with the original format of the input DEM data, which is single-channel, a final post-processing step is performed. This involves transforming the three-channel super-resolution DEM back into a single-channel DEM, for instance, by calculating the mean along each pixel channel. For example, for each pixel location, the elevation values across the three channels are averaged to produce a single elevation value for the corresponding pixel in the final single-channel output. This step is a direct reversal of the initial preprocessing step 301 where the single-channel input was replicated across three channels. Averaging the three channels in the output provides a straightforward way to revert to the original single-channel representation of the DEM while incorporating the learned super-resolution enhancements achieved by processing the data in a three-channel format.

At step 307, the output module 207 provides the single-channel high-resolution digital elevation data as an output.

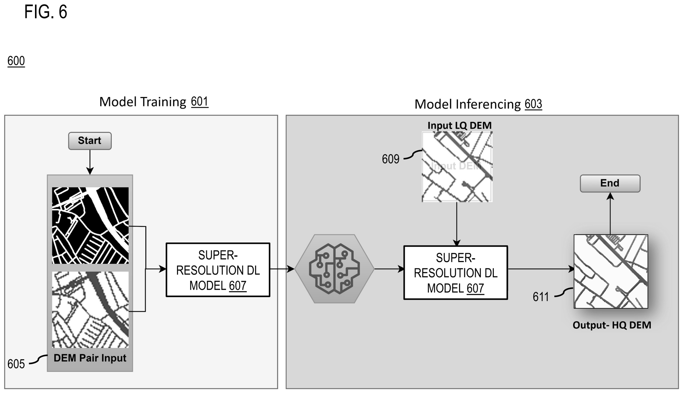

FIG. 6 is a diagram of an AI model workflow 600 for providing artificial-intelligence (AI) -based upscaling of digital elevation data, according to one example embodiment. FIG. 6 depicts two primary operational phases: a Model Training phase 601 and a Model Inferencing phase 603. The Model Training phase 601 commences ('Start') by receiving paired input data 605 ('DEM Pair Input'). This paired data comprises a Low Quality (LQ) Digital Elevation Model dataset and a corresponding High Quality (HQ) Digital Elevation Model dataset for the same geographical region. As described herein, the LQ DEM may originate from sources such as satellite-based sensors, possessing lower resolution (e.g., 30 meters) and lower spatial accuracy. The HQ DEM may originate from sources such as LiDAR or IMU data (e.g., collected using specialized mapping vehicles 107), possessing higher resolution and accuracy. This paired input data 605 is utilized to train a generative super-resolution DL model 607. The output of the Model Training phase 601 is a trained super-resolution DL model 607 which encapsulates the learned parameters for performing super-resolution.

The Model Inferencing phase 603 utilizes the trained super-resolution DL model 607 generated during the training phase 601. An Input LQ DEM 609, representing a low-quality elevation map for a region of interest, is provided as input to the trained super-resolution DL model 607. The trained super-resolution model 607 applies the learned super-resolution function to the Input LQ DEM 609. The processing results in the generation of an Output- HQ DEM 611. This Output- HQ DEM 611 represents a high-resolution, high-accuracy version of the input elevation data, effectively upscaling the LQ input 609 while potentially correcting inaccuracies and producing results with both high perceptual quality and high numerical elevation accuracy (low RMSE, high SSIM/PSNR).

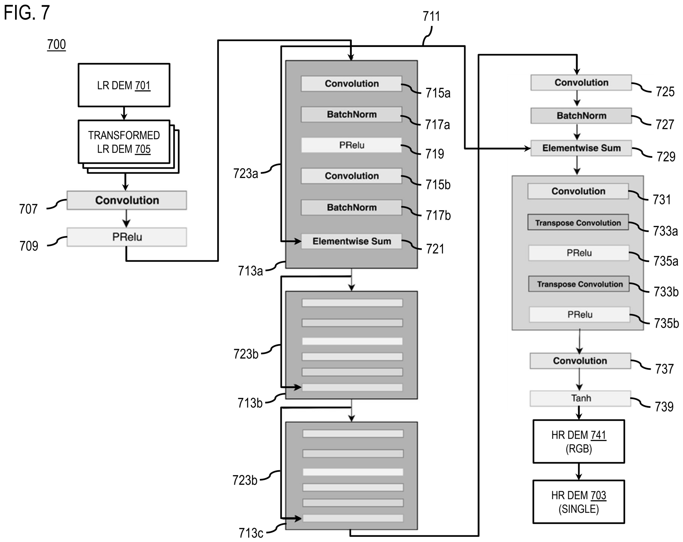

FIG. 7 is a diagram of an architecture 700 for a super-resolution deep learning (DL) model, according to one example embodiment. In one embodiment, the architecture 700 is a deep convolutional neural network (CNN) designed for up-scaling digital elevation data, specifically illustrated here for converting a Low-Resolution Digital Elevation Model (LR DEM) input 701 into a High-Resolution Digital Elevation Model (HR DEM) output 703. The architecture employs residual learning principles through multiple residual blocks 705a-705c and includes an up-sampling stage utilizing transpose convolutions to increase the spatial resolution of the output 703.

The network architecture 700 processes input data 701 sequentially through several stages, beginning with an input stage configured to receive Low-Resolution Digital Elevation Model (LR DEM) data 701. The LR DEM data 701, typically representing elevation values in a single-channel 2D matrix format (e.g., grayscale image where pixel intensity corresponds to elevation), is first processed using, e.g., an image band transformation to transform the single-channel LR DEM data 701 to multiple channels (e.g., RGB channels). In one embodiment, this transformation is achieved by duplicating the single input channel three times into each of the three channels of the transformed LR DEM 705.

The transformed three-channel data proceeds to an initial feature extraction stage. This stage comprises a first Convolution2D layer 707, followed by a Parametric Rectified Linear Unit (PReLU) activation layer 709. The Convolution2D layer 707 applies a set of learnable filters to extract initial low-level features from the input data. The PReLU activation layer 709 introduces non-linearity, allowing the network 700 to learn more complex patterns. The output feature maps from this initial stage serve as input to the main body of the network 700 and are also utilized later via a skip connection 711.

The main body of the network consists of a series of residual blocks 713a-713c (also collectively referred to as residual blocks 713). Although the architecture 700 depicts three such blocks 713, it is contemplated that more or fewer of these blocks can be used. In this example, residual block 713 contains two Convolution2D layers 715a and 715b.

Each residual block 713 follows a consistent structure designed to facilitate the training of deep networks and preserve feature information. Within a block 713, the input feature map first passes through a Convolution2D layer 715a, followed by a Batch Normalization layer 717a, and then a PReLU activation layer 917. This sequence is repeated with a second Convolution2D layer 715b and a second Batch Normalization layer 717b. The output of the second Batch Normalization layer 717b is combined with the original input to the residual block 713 via an Elementwise Sum operation 721. This constitutes a residual or skip connection (e.g., skip connections 723a-723c respectively for residual blocks 713a-713c), allowing the network to learn modifications (residuals) to the identity mapping, improving gradient flow and enabling deeper architectures.

Following the series of residual blocks 713, the resulting feature maps are processed by a Convolution2D layer 725 and another Batch Normalization layer 727. The output of this Batch Normalization layer 727 is then combined with the output of the initial feature extraction stage (specifically, the output of the first PReLU layer 709) via a second Elementwise Sum operation 729. This long-range skip connection further aids in preserving information from the initial stages of the network.

The subsequent stage performs the up-sampling to increase the resolution of the feature maps. This is achieved using learnable up-sampling layers. In this embodiment, two sequential up-sampling blocks are employed. Each up-sampling block comprises a Transpose Convolution layer 733a and 733b (also known as a deconvolution layer) followed by a PreLU activation layer 735a and 735b. The Transpose Convolution layers 733a and 733b contain learnable parameters that are optimized during training to generate high-quality, high-resolution feature representations from the lower-resolution inputs, effectively increasing the spatial dimensions of the feature maps.

Finally, the output stage consists of a final Convolution2D layer 737 which maps the high-resolution features to the desired output format (three channels in this intermediate step). This is followed by a Tanh activation layer 739. The Tanh activation function 739 scales the output values to a range typically between -1 and 1. The output of the Tanh layer 739 represents the generated three-channel HR DEM 741. This three-channel HR DEM 741 is then transformed into the single-channel HR DEM 703.

It is noted that the architecture 700 is provided by way of illustration and not as limitations. It is contemplated different equivalent layers or structures can be used, and that the number and order of the layers can be rearranged, omitted, added, or otherwise modified.

In one embodiment, the mapping platform 117 may use the High-Resolution Digital Elevation Model (HR DEM) output, generated by a super-resolution DL model as described herein, for the purpose of mapping one or more roads within a road network. For example, the mapping platform 117 first ingests the HR DEM data, which provides accurate and detailed terrain elevation information, and ensures its proper georeferencing and alignment with other relevant spatial datasets, such as aerial or satellite imagery and optionally vehicle probe data. Subsequently, the mapping platform 117 performs feature extraction and analysis upon the HR DEM, which may include calculating slope and gradient maps to identify areas consistent with engineered road grade constraints, analyzing elevation profiles along potential paths to detect the characteristic smoothness or engineered contours of roadways, and examining cross-sectional profiles to discern features like embankments, cuts, or road crowns.

In one embodiment, the high resolution and accuracy of the elevation data further enable the mapping platform 117 to identify and distinguish complex road structures, such as overpasses and underpasses, by detecting significant elevation differences at path crossings, or bridges and tunnels based on their distinct elevation signatures relative to the surrounding terrain. Findings derived from the HR DEM analysis can be integrated and cross-referenced with information from other data sources, for instance, using imagery to visually confirm pavement or using probe data to corroborate paths of travel, thereby increasing the confidence and accuracy of road identification.

Based on this analysis, the mapping platform generates or refines a digital representation of the road network, typically comprising vector data defining road centerlines or geometries, wherein the vertices incorporate precise three-dimensional coordinates (X, Y, Z) with the elevation (Z) value derived directly from the HR DEM. Furthermore, relevant attributes, such as calculated slope, elevation profiles, or flags indicating the presence of structures identified via DEM analysis, are associated with the corresponding road segments. Finally, after undergoing validation procedures, this enhanced, three-dimensional road network data, encompassing both accurate geometry and derived attributes, is formatted and persistently stored as digital map data within the geographic database 125 for utilization in various geospatial applications, including navigation, routing, and map rendering.

For example, the updated map data, incorporating precise three-dimensional road geometry, accurate elevation profiles, and detailed slope information derived from the High-Resolution DEM, enhances the performance and safety of Advanced Driver Assistance Systems (ADAS) and autonomous vehicles (AVs). This enriched map data enables improved vehicle localization by allowing onboard sensors (like LiDAR, radar, and cameras) to match features against a highly accurate 3D environmental model, improving positioning accuracy beyond GPS capabilities, especially in challenging areas like tunnels or dense urban canyons. Furthermore, the predictive knowledge of upcoming road characteristics, such as inclines, declines, curvature, and banking, facilitates proactive vehicle control adjustments for ADAS features like adaptive cruise control and predictive emergency braking, as well as enabling AVs to optimize powertrain management for energy efficiency, adjust suspension for ride comfort and stability, and plan smoother, safer trajectories well in advance, thereby contributing significantly to overall operational reliability and passenger safety.

Returning to FIG. 1, as shown, the system 100 comprises one or more satellites 101, vehicles 107 and/or one or more UEs 113 that act as probes traveling over a road network to capture digital elevation data. Although the vehicles 107 are depicted as automobiles, it is contemplated that the vehicles 107 can be any type of transportation vehicle, manned or unmanned (e.g., planes, aerial drone vehicles, motorcycles, boats, bicycles, etc.), and the UE 113 can be associated with any of the types of vehicles or a person or thing (e.g., a pedestrian) traveling within a transportation or road network. In one embodiment, each vehicle 107 and/or UE 113 is assigned a unique probe identifier (probe ID) for use in reporting or transmitting probe data and/or digital elevation data collected by the satellites 101, vehicles 107 and UE 113. The vehicles 107 and UE 113, for instance, are part of a probe-based system for collecting probe data for monitoring a road network. In one embodiment, each vehicle 107 and/or UE 113 is configured to report probe data as probe points, which are individual data records collected at a point in time that records telemetry data for that point in time. The probe points and/or digital elevation data can be reported from the vehicles 107 and/or UEs 113 in real-time, in batches, continuously, or at any other frequency requested by the system 100 over, for instance, the communication network 127 for processing by the mapping platform 117.

In one embodiment, the mapping platform 117 performs the processes for providing single-image depth-estimation according to various embodiments described herein. By way of example, the mapping platform 117 can be a standalone server or a component of another device with connectivity to the communication network 127. For example, the component can be part of an edge computing network where remote computing devices (not shown) are installed along or within proximity of a transportation network to provide depth estimation.

In one embodiment, the vehicles 107 and/or UE 113 may execute an application to present or use the results of depth estimation generated by the mapping platform 117 according to the embodiments described herein. For example, if the application is a navigation application, then the depth estimation results can be used to determine positioning information, routing information, and the like.

By way of example, the UE 113 is any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the UE 113 can support any type of interface to the user (such as "wearable" circuitry, etc.). In one embodiment, the UE 113 may be associated with a vehicle 107 (e.g., cars), a component part of the vehicle 107, a mobile device (e.g., phone), and/or a combination of thereof. Similarly, the vehicle 107 may include computing components that can perform all or a portion of the functions of the UE 113.

By way of example, the application may be any type of application that is executable at the vehicle 107 and/or the UE 113, such as mapping applications, location-based service applications, navigation applications, content provisioning services, camera/imaging application, media player applications, social networking applications, calendar applications, and the like. In one embodiment, the application may act as a client for the mapping platform 117 and perform one or more functions of the mapping platform 117 alone or in combination with the platform 117.

In one embodiment, the vehicles 107 and/or the UE 113 are configured with various sensors for generating digital elevation data and/or related probe data. By way of example, the sensors for generating digital elevation data and/or probe data may include a global positioning sensor for gathering location data (e.g., GPS), Light Detection And Ranging (LIDAR) for gathering distance data and/or generating depth maps, infrared sensors for thermal imagery, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture obstruction for analysis and documentation purposes), an audio recorder for gathering audio data, velocity sensors mounted on steering wheels of the vehicles, switch sensors for determining whether one or more vehicle switches are engaged, and the like.

In another embodiment, the sensors of the vehicles 107 and/or UE 113 may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, sensors about the perimeter of the vehicle may detect the relative distance of the vehicle from lane or roadways, the presence of other vehicles, pedestrians, traffic lights, potholes and any other objects, or a combination thereof. In one scenario, the sensors may detect weather data, traffic information, or a combination thereof. In one example embodiment, the vehicles 107 and/or UE 113 may include GNSS receivers (e.g. GPS, Galileo, GLONASS or receivers) to obtain geographic coordinates from satellites for determining current location and time associated with the vehicle 107 and/or UE 113 for generating probe data. Further, the location can be determined by a triangulation system such as A-GPS, Cell of Origin, or other location extrapolation technologies.

The communication network 127 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

The services platform 129 may include any type of service 131. By way of example, the services 131 may include mapping services, navigation services, travel planning services, notification services, social networking services, content (e.g., audio, video, images, etc.) provisioning services, application services, storage services, contextual information determination services, location-based services, information based services (e.g., weather, news, etc.), etc. In one embodiment, the services platform 129 may interact with the mapping platform 117, the vehicle 107, the UE 113, and/or one or more content providers 133 to provide the services 131.

In one embodiment, the content providers 133 may provide content or data to the vehicles 107 and/or UEs 113, the mapping platform 117, and/or the services 131. The content provided may be any type of content, such as digital elevation data, mapping content, textual content, audio content, video content, image content, etc. In one embodiment, the content providers 133 may provide content that may aid in the various embodiment of path-based map matching described herein. In one embodiment, the content providers 133 may also store content associated with the vehicles 107, the UE 113, the mapping platform 117, and/or the services 131. In another embodiment, the content providers 133 may manage access to a central repository of data, and offer a consistent, standard interface to data, such as a repository of probe data, probe features/attributes, link features/attributes, etc. Any known or still developing methods, techniques or processes for retrieving and/or accessing feature values for probe points and/or road links from one or more sources may be employed by the mapping platform 117.

By way of example, the vehicles 107, the UEs 113, the mapping platform 117, the services platform 129, and/or the content providers 133 communicate with each other and other components of the system 100 using well known, new or still developing protocols. In this context, a protocol includes a set of rules defining how the network nodes within the communication network 127 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

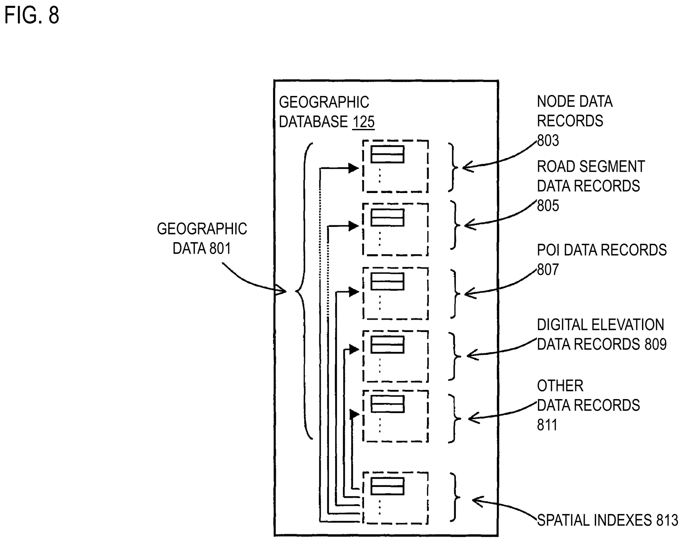

FIG. 8 is a diagram of a geographic database 125, according to one embodiment. In one embodiment, the geographic database 125 includes geographic data 801 used for (or configured to be compiled to be used for) mapping and/or navigation-related services. In one embodiment, the geographic database 125 include high resolution or high definition (HD) mapping data that provide centimeter-level or better accuracy of map features. For example, the geographic database 125 can be based on Light Detection and Ranging (LiDAR) or equivalent technology to collect billions of 3D points and model road surfaces and other map features down to the number lanes and their widths. In one embodiment, the HD mapping data (e.g., HD data records 811) capture and store details such as the slope and curvature of the road, lane markings, roadside objects such as sign posts, including what the signage denotes. By way of example, the HD mapping data enable highly automated vehicles to precisely localize themselves on the road, and to determine map data updates (e.g., learned speed limit values) to at high accuracy levels.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 125.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 125 follows certain conventions. For example, links do not cross themselves and do not cross each other except at a node. Also, there are no duplicated shape points, nodes, or links. Two links that connect each other have a common node. In the geographic database 125, overlapping geographic features are represented by overlapping polygons. When polygons overlap, the boundary of one polygon crosses the boundary of the other polygon. In the geographic database 125, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

In one embodiment, the geographic database 125 is stored as a hierarchical or multilevel tile-based projection or structure. More specifically, in one embodiment, the geographic database 125 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid in order to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

As shown, the geographic database 125 includes node data records 803, road segment or link data records 805, POI data records 807, digital elevation data records 809, HD mapping data records 811, and indexes 813, for example. More, fewer, or different data records can be provided. In one embodiment, additional data records (not shown) can include cartographic ("carto") data records, routing data, and maneuver data. In one embodiment, the indexes 813 may improve the speed of data retrieval operations in the geographic database 125. In one embodiment, the indexes 813 may be used to quickly locate data without having to search every row in the geographic database 125 every time it is accessed. For example, in one embodiment, the indexes 813 can be a spatial index of the polygon points associated with stored feature polygons.

In exemplary embodiments, the road segment data records 805 are links or segments representing roads, streets, or paths, as can be used in the calculated route or recorded route information for determination of one or more personalized routes. The node data records 803 are end points corresponding to the respective links or segments of the road segment data records 805. The road link data records 805 and the node data records 803 represent a road network, such as used by vehicles, cars, and/or other entities. Alternatively, the geographic database 125 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 125 can include data about the POIs and their respective locations in the POI data records 807. The geographic database 125 can also include data about places, such as cities, towns, or other communities, and other geographic features, such as bodies of water, mountain ranges, etc. Such place or feature data can be part of the POI data records 807 or can be associated with POIs or POI data records 807 (such as a data point used for displaying or representing a position of a city).

In one embodiment, the geographic database 125 includes digital elevation data records 809 which store digital elevation data, depth maps, training data, and/or related information. For example, the map matching data records 809 can store collected digital elevation data for train a super-resolution DL model and other related models.

In one embodiment, as discussed above, the HD mapping data records 811 model road surfaces and other map features to centimeter-level or better accuracy. The HD mapping data records 811 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 811 are divided into spatial partitions of varying sizes to provide HD mapping data to vehicles 107 and other end user devices with near real-time speed without overloading the available resources of the vehicles 107 and/or devices (e.g., computational, memory, bandwidth, etc. resources).

In one embodiment, the HD mapping data records 811 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 811.

In one embodiment, the HD mapping data records 811 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 125 can be maintained by the content provider 133 in association with the services platform 129 (e.g., a map developer). The map developer can collect geographic data to generate and enhance the geographic database 125. There can be different ways used by the map developer to collect data. These ways can include obtaining data from other sources, such as municipalities or respective geographic authorities. In addition, the map developer can employ field personnel to travel by vehicle (e.g., vehicle 107 and/or user device 113) along roads throughout the geographic region to observe features and/or record information about them, for example. Also, remote sensing, such as aerial or satellite photography, can be used.

The geographic database 125 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by a vehicle 107 or user device 113. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing AI-based upscaling of digital elevation data may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

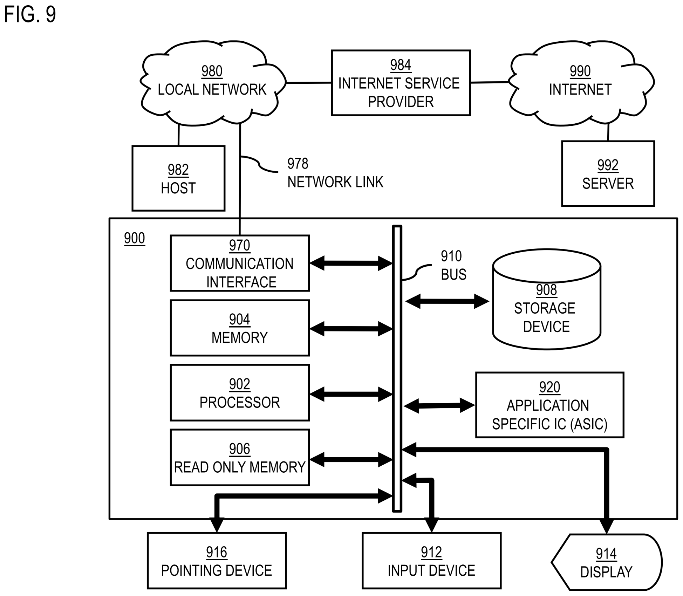

FIG. 9 illustrates a computer system 900 upon which an embodiment of the invention may be implemented. Computer system 900 is programmed (e.g., via computer program code or instructions) to provide AI-based upscaling of digital elevation data as described herein and includes a communication mechanism such as a bus 910 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 910 includes one or more parallel conductors of information so that information is transferred quickly among devices coupled to the bus 910. One or more processors 902 for processing information are coupled with the bus 910.

A processor 902 performs a set of operations on information as specified by computer program code related to providing AI-based upscaling of digital elevation data. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 910 and placing information on the bus 910. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 902, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 900 also includes a memory 904 coupled to bus 910. The memory 904, such as a random access memory (RAM) or other dynamic storage device, stores information including processor instructions for providing AI-based upscaling of digital elevation data. Dynamic memory allows information stored therein to be changed by the computer system 900. RAM allows a unit of information stored at a location called a memory address to be stored and retrieved independently of information at neighboring addresses. The memory 904 is also used by the processor 902 to store temporary values during execution of processor instructions. The computer system 900 also includes a read only memory (ROM) 906 or other static storage device coupled to the bus 910 for storing static information, including instructions, that is not changed by the computer system 900. Some memory is composed of volatile storage that loses the information stored thereon when power is lost. Also coupled to bus 910 is a non-volatile (persistent) storage device 908, such as a magnetic disk, optical disk or flash card, for storing information, including instructions, that persists even when the computer system 900 is turned off or otherwise loses power.

Information, including instructions for providing AI-based upscaling of digital elevation data, is provided to the bus 910 for use by the processor from an external input device 912, such as a keyboard containing alphanumeric keys operated by a human user, or a sensor. A sensor detects conditions in its vicinity and transforms those detections into physical expression compatible with the measurable phenomenon used to represent information in computer system 900. Other external devices coupled to bus 910, used primarily for interacting with humans, include a display device 914, such as a cathode ray tube (CRT) or a liquid crystal display (LCD), or plasma screen or printer for presenting text or images, and a pointing device 916, such as a mouse or a trackball or cursor direction keys, or motion sensor, for controlling a position of a small cursor image presented on the display 914 and issuing commands associated with graphical elements presented on the display 914. In some embodiments, for example, in embodiments in which the computer system 900 performs all functions automatically without human input, one or more of external input device 912, display device 914 and pointing device 916 is omitted.

In the illustrated embodiment, special purpose hardware, such as an application specific integrated circuit (ASIC) 920, is coupled to bus 910. The special purpose hardware is configured to perform operations not performed by processor 902 quickly enough for special purposes. Examples of application specific ICs include graphics accelerator cards for generating images for display 914, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 900 also includes one or more instances of a communications interface 970 coupled to bus 910. Communication interface 970 provides a one-way or two-way communication coupling to a variety of external devices that operate with their own processors, such as printers, scanners and external disks. In general the coupling is with a network link 978 that is connected to a local network 980 to which a variety of external devices with their own processors are connected. For example, communication interface 970 may be a parallel port or a serial port or a universal serial bus (USB) port on a personal computer. In some embodiments, communications interface 970 is an integrated services digital network (ISDN) card or a digital subscriber line (DSL) card or a telephone modem that provides an information communication connection to a corresponding type of telephone line. In some embodiments, a communication interface 970 is a cable modem that converts signals on bus 910 into signals for a communication connection over a coaxial cable or into optical signals for a communication connection over a fiber optic cable. As another example, communications interface 970 may be a local area network (LAN) card to provide a data communication connection to a compatible LAN, such as Ethernet. Wireless links may also be implemented. For wireless links, the communications interface 970 sends or receives or both sends and receives electrical, acoustic or electromagnetic signals, including infrared and optical signals, that carry information streams, such as digital data. For example, in wireless handheld devices, such as mobile telephones like cell phones, the communications interface 970 includes a radio band electromagnetic transmitter and receiver called a radio transceiver. In certain embodiments, the communications interface 970 enables connection to the communication network 127 for providing AI-based upscaling of digital elevation data.

The term computer-readable medium is used herein to refer to any medium that participates in providing information to processor 902, including instructions for execution. Such a medium may take many forms, including, but not limited to, non-volatile media, volatile media and transmission media. Non-volatile media include, for example, optical or magnetic disks, such as storage device 908. Volatile media include, for example, dynamic memory 904. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 978 typically provides information communication using transmission media through one or more networks to other devices that use or process the information. For example, network link 978 may provide a connection through local network 980 to a host computer 982 or to equipment 984 operated by an Internet Service Provider (ISP). ISP equipment 984 in turn provides data communication services through the public, world-wide packet-switching communication network of networks now commonly referred to as the Internet 990.

A computer called a server host 992 connected to the Internet hosts a process that provides a service in response to information received over the Internet. For example, server host 992 hosts a process that provides information representing video data for presentation at display 914. It is contemplated that the components of system can be deployed in various configurations within other computer systems, e.g., host 982 and server 992.

FIG. 10 illustrates a chip set 1000 upon which an embodiment of the invention may be implemented. Chip set 1000 is programmed to provide AI-based upscaling of digital elevation data as described herein and includes, for instance, the processor and memory components described with respect to FIG. 9 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1000 includes a communication mechanism such as a bus 1001 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more digital signal processors (DSP) 1007, or one or more application-specific integrated circuits (ASIC) 1009. A DSP 1007 typically is configured to process real-world signals (e.g., sound) in real time independently of the processor 1003. Similarly, an ASIC 1009 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein to provide AI-based upscaling of digital elevation data. The memory 1005 also stores the data associated with or generated by the execution of the inventive steps.

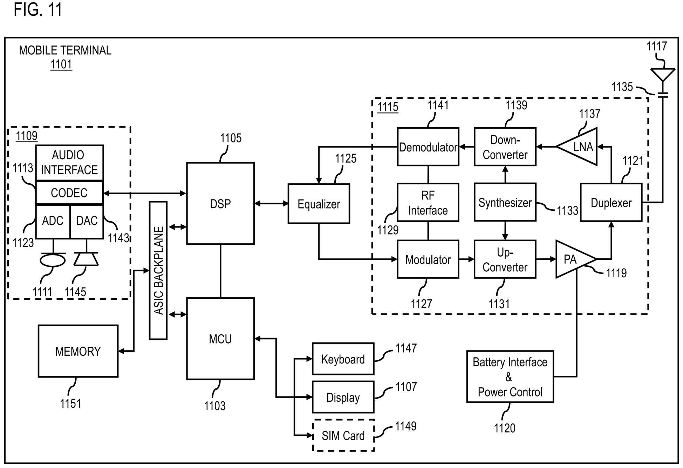

FIG. 11 is a diagram of exemplary components of a mobile terminal (e.g., UE 113, vehicle 107, or component thereof) capable of operating in the system of FIG. 1, according to one embodiment. Generally, a radio receiver is often defined in terms of front-end and back-end characteristics. The front end of the receiver encompasses all of the Radio Frequency (RF) circuitry whereas the back end encompasses all of the base-band processing circuitry. Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile station functions that offer automatic contact matching. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The power amplifier (PA) 1119 and the transmitter/modulation circuitry are operationally responsive to the MCU 1103, with an output from the PA 1119 coupled to the duplexer 1121 or circulator or antenna switch, as known in the art. The PA 1119 also couples to a battery interface and power control unit 1120.

In use, a user of mobile station 1101 speaks into the microphone 1111 and his or her voice along with any detected background noise is converted into an analog voltage. The analog voltage is then converted into a digital signal through the Analog to Digital Converter (ADC) 1123. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1125 for compensation of any frequency-dependent impairments that occur during transmission though the air such as phase and amplitude distortion. After equalizing the bit stream, the modulator 1127 combines the signal with a RF signal generated in the RF interface 1129. The modulator 1127 generates a sine wave by way of frequency or phase modulation. In order to prepare the signal for transmission, an up-converter 1131 combines the sine wave output from the modulator 1127 with another sine wave generated by a synthesizer 1133 to achieve the desired frequency of transmission. The signal is then sent through a PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1135 to match impedances to provide maximum power transfer. Finally, the signal is transmitted via antenna 1117 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1101 are received via antenna 1117 and immediately amplified by a low noise amplifier (LNA) 1137. A down-converter 1139 lowers the carrier frequency while the demodulator 1141 strips away the RF leaving only a digital bit stream. The signal then goes through the equalizer 1125 and is processed by the DSP 1105. A Digital to Analog Converter (DAC) 1143 converts the signal and the resulting output is transmitted to the user through the speaker 1145, all under control of a Main Control Unit (MCU) 1103-which can be implemented as a Central Processing Unit (CPU) (not shown).

The MCU 1103 receives various signals including input signals from the keyboard 1147. The keyboard 1147 and/or the MCU 1103 in combination with other user input components (e.g., the microphone 1111) comprise a user interface circuitry for managing user input. The MCU 1103 runs a user interface software to facilitate user control of at least some functions of the mobile station 1101 to provide AI-based upscaling of digital elevation data. The MCU 1103 also delivers a display command and a switch command to the display 1107 and to the speech output switching controller, respectively. Further, the MCU 1103 exchanges information with the DSP 1105 and can access an optionally incorporated SIM card 1149 and a memory 1151. In addition, the MCU 1103 executes various control functions required of the station. The DSP 1105 may, depending upon the implementation, perform any of a variety of conventional digital processing functions on the voice signals. Additionally, DSP 1105 determines the background noise level of the local environment from the signals detected by microphone 1111 and sets the gain of microphone 1111 to a level selected to compensate for the natural tendency of the user of the mobile station 1101.

The CODEC 1113 includes the ADC 1123 and DAC 1143. The memory 1151 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1151 may be, but not limited to, a single memory, CD, DVD, ROM, RAM, EEPROM, optical storage, or any other non-volatile or non-transitory storage medium capable of storing digital data.

An optionally incorporated SIM card 1149 carries, for instance, important information, such as the cellular phone number, the carrier supplying service, subscription details, and security information. The SIM card 1149 serves primarily to identify the mobile station 1101 on a radio network. The card 1149 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A computer-implemented method comprising:
transforming first low-resolution digital elevation data comprising a single data channel to second low-resolution digital elevation data comprising a plurality of data channels by replicating the single data channel to each data channel of the plurality of data channels;
inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
transforming the first high-resolution digital elevation data comprising the plurality of data channels into second high-resolution digital elevation data comprising the single data channel; and
providing the second high-resolution digital elevation data as an output.

2. The computer-implemented method of claim 1, wherein the super-resolution DL model is trained using training dataset comprising aerial digital elevation data and corresponding street level digital elevation data depicting a geographic area, and wherein the street level digital elevation data is used as ground truth for the aerial digital elevation data for the training.

3. The computer-implemented method of claim 2, wherein the aerial digital elevation data is captured by one or more aerial platforms, and wherein the street level digital elevation data is captured by one or more terrestrial vehicles.

4. The computer-implemented method of claim 2, wherein the super-resolution DL model is trained based only on a root mean squared error (RMSE) loss function.

5. The computer-implemented method of claim 1, wherein the super-resolution DL model is a generative adversarial network (GAN) comprising a generator network and a discriminator network, and wherein the generator network comprises one or more convolutional layers and one or more batch normalization layers with a parameterized rectified linear unit (PReLU) activation unit.

6. The computer-implemented method of claim 5, wherein one or more convolutional layers includes at least one convolutional two-dimensional (2D) layer and at least one transpose convolutional layer, and wherein the one or more convolutional layers are learnable layers.

7. The computer-implemented method of claim 1, wherein the first high-resolution digital elevation data comprising the plurality of data channels is transformed into the second high-resolution digital elevation data comprising the single data channel by computing a mean of the plurality of data channels.

8. The computer-implemented method of claim 1, wherein the single data channel comprises per-pixel elevation values.

9. The computer-implemented method of claim 1, wherein the plurality of data channels corresponded to a red color data channel, a green color data channel, and a blue color data channel of an RGB image.

10. The computer-implemented method of claim 1, further comprising:
mapping one or more roads of a road network based on the output; and
storing the one or more mapped roads in digital map data of a geographic database.

11. An apparatus comprising:
at least one processor; and
at least one memory including computer program code for one or more programs,
the at least one memory and the computer program code configured to, with the at least one processor, cause the apparatus to perform at least the following,
transforming first low-resolution digital elevation data comprising a single data channel to second low-resolution digital elevation data comprising a plurality of data channels by replicating the single data channel to each data channel of the plurality of data channels;
inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
transforming the first high-resolution digital elevation data comprising the plurality of data channels into second high-resolution digital elevation data comprising the single data channel; and
providing the second high-resolution digital elevation data as an output.

12. The apparatus of claim 11, wherein the super-resolution DL model is trained using training dataset comprising aerial digital elevation data and corresponding street level digital elevation data depicting a geographic area, and wherein the street level digital elevation data is used as ground truth for the aerial digital elevation data for the training.

13. The apparatus of claim 12, wherein the aerial digital elevation data is captured by one or more aerial platforms, and wherein the street level digital elevation data is captured by one or more terrestrial vehicles.

14. The apparatus of claim 12, wherein the super-resolution DL model is trained based only on a root mean squared error (RMSE) loss function.

15. A non-transitory computer-readable storage medium, carrying one or more sequences of one or more instructions which, when executed by one or more processors, cause an apparatus to at least perform the following steps:
transforming first low-resolution digital elevation data comprising a single data channel to second low-resolution digital elevation data comprising a plurality of data channels by replicating the single data channel to each data channel of the plurality of data channels;
inputting the second low-resolution digital elevation data into a super-resolution deep learning (DL) model to generate first high-resolution digital elevation data comprising the plurality of data channels, wherein the super-resolution DL model is configured to accept input data comprising the plurality of data channels;
transforming the first high-resolution digital elevation data comprising the plurality of data channels into second high-resolution digital elevation data comprising the single data channel; and
providing the second high-resolution digital elevation data as an output.
